(19) Europäisches Patentamt
European Patent Office
Office européen des brevets

(11) Numéro de publication: **0 148 114**
**A1**

(12) # DEMANDE DE BREVET EUROPEEN

(21) Numéro de dépôt: **84810530.0**

(22) Date de dépôt: **01.11.84**

(51) Int. Cl.⁴: **A 23 J 3/00**

(30) Priorité: **03.11.83 CH 5935/83**

(43) Date de publication de la demande:
**10.07.85 Bulletin 85/28**

(84) Etats contractants désignés:
**AT BE CH DE FR GB LI LU NL SE**

(71) Demandeur: **BATTELLE MEMORIAL INSTITUTE**
**7 route de Drize**
**CH-1227 Carouge/Genève(CH)**

(72) Inventeur: **Kulhanek, Antonin**
**47, avenue de Lignon**
**CH-1219 Le Lignon(CH)**

(72) Inventeur: **Porta, Augusto**
**52, route de Drize**
**CH-1227 Carouge(CH)**

(72) Inventeur: **Ayerbe, André**
**Les Chavannes Ramboex**
**CH-74800 Reignier(CH)**

(72) Inventeur: **Bunter, Guy**
**28, avenue Vibert**
**CH-1227 Carouge(CH)**

(74) Mandataire: **Dousse, Blasco et al,**
**7, route de Drize**
**CH-1227 Carouge/Genève(CH)**

(54) **Procédé pour préparer des protéines du sang décolorées.**

(57) On soumet le sang complet, ou le cruor qui en provient après séparation du plasma, à une hémolyse puis à une digestion enzymatique ménagée, ce qui a pour effet de rendre plus accessible aux oxydants en milieu aqueux le pigment rouge de l'hémoglobine. Celui-ci peut alors être décoloré par oxydation dans des conditions douces, le mélange résultant de cette oxydation étant ensuite traité pour en séparer les solides contenant du fer assimilable sous forme d'une poudre sèche. Cette poudre s'utilise avantageusement dans l'alimentation humaine.

EP 0 148 114 A1

0148114

PROCEDE POUR PREPARER DES PROTEINES DU SANG DECOLOREES

La présente invention concerne en général la mise en valeur des sous-produits de l'industrie de la viande et a notamment pour objet l'utilisation, dans l'alimentation humaine ou animale, des composants solides du sang des animaux de boucherie en provenance des abattoirs.

On sait que le sang des mammifères comprend, d'une part, le plasma (une solution aqueuse qui représente 60 à 65% du volume du sang et qui contient environ le tiers des protéines de celui-ci accompagnées d'autres produits solubles tels que sels minéraux, glucose et autres) et, d'autre part, les globules rouges ou erythrocytes contenant le restant des protéines du sang (120 à 160 g/l) et, plus particulièrement, l'hémoglobine qui en est le constituant essentiel.

Dans la pratique habituelle, après addition au sang d'un anti-coagulant (agent chélatant comme un citrate alcalin ou l'EDTA), on sépare les globules rouges (cruor) du plasma par centrifugation. Le plasma est couramment utilisé sous forme liquide ou après deshydratation, dans l'alimentation humaine, notamment comme liant dans les produits de charcuterie.

Le cruor est, par contre, à cause de sa couleur peu appétissante, plutôt réservé, en général, à l'alimentation animale. Or, les protéines des globules rouges du sang constituent en principe, de par leur composition en acides aminés, un aliment de choix pour l'homme; en effet, la distribution particulière de certains des aminoacides qu'elles contiennent permet, lorsqu'on les mélange à des aliments protéiques d'origine végétale, de compenser les défauts de ces derniers en de tels aminoacides.

Il est donc hautement désirable pour l'industrie alimentaire de disposer d'un procédé simple et économique pour décolorer l'hémoglobine du sang et de convertir les matières nutritives contenues dans celui-ci sous une forme permettant leur utilisation dans l'alimentation humaine.

De nombreuses méthodes ont déjà été proposées dans une telle optique, parmi lesquelles on peut citer les suivantes:

a) Extraction des pigments colorés dans un solvant organique: suivant ce procédé (ANTONINI et al; PALMIN et al; TYBOR et al) on ajoute à une solution acide d'hémoglobine une forte concentration d'un solvant organique hydrosoluble (alcools, cétones, etc..) ce qui conduit à une dénaturation hydrolytique de la portion protéique de l'hémoglobine, à la scission de la liaison entre celle-ci et les groupes porphyriques contenant, sous forme de complexe, le fer de l'hémoglobine et donnant à celle-ci sa couleur typique (radical heme) et à la dissolution de ce radical dans le solvant organique. Il se produit alors une séparation de phases, la protéine (globine) dénaturée étant précipitée sous forme solide et le pigment restant en solution dans la phase liquide.

b) Décoloration par l'eau oxygénée (CORD et al): suivant ce procédé, on provoque d'abord l'hémolyse (c'est-à-dire l'éclatement) des erythrocytes en les mélangeant avec un excès d'eau ce qui fournit une solution aqueuse d'hémoglobine qu'on traite à température relativement élevée (70°C) avec un grand excès d'eau oxygénée. Ce traitement a pour effet de scinder les groupes porphyriques complexés avec le fer de l'hémoglobine, de dénaturer irréversiblement les chaînes protéiques de celles-ci et de décolorer ces groupes hémiques par, vraisemblablement, oxygénolyse du complexe hétérocyclique ferrique (voir J. WISMER-PEDERSEN). Après décoloration, on détruit l'eau oxygénée en excès, par exemple par la catalase.

c) Hydrolyse enzymatique (STACHOWICS et al; HELLQUIST; DREPPER et al; FREIHEIM et al): ce procédé comprend la scission des groupes porphyriques par l'action d'enzymes protéolytiques (par exemple l'alcalase) ainsi que l'hydrolyse partielle des chaînes protéiques en peptides de poids moléculaires variés. On sépare ensuite ces peptides de la fraction pigmentée de l'hydrolysat par ultrafiltration sur membranes semi-perméables ou par adsorbtion de l'heme sur charbon actif.

On trouvera plus de détails sur l'état de la technique dans ce domaine en consultant les documents suivants dont font partie les références susmentionnées.

"ANTONINI, E. et M. BRUNORT (1971): Hemoglobin and myoglobin in their reactions with ligands. North Holland Publishing Co., Amsterdam, P. 125; BORCHERS, C.W.A. (1942): Patent DE-PS 744 055; BUCHBJERG, K.O. (1977): Isolering af globin samt funktionelle egenskaber af globin og haemoglobin. Thesis, Royal Vet. and Agricultural University, Copenhagen; DREPPER, G. et K. DREPPER (1979); Verfahren zur Herstellung neuer Eiweissprodukte aus Schlachttierblut für Nahrungsmittel. Fleischwirtsch. 59(9) 1952; DROSTE, R. (1915): Concealing the use of blood in bread, Chem. Z 39, 634, (Chem. Abstr. 9, 2782); FRETHEIM, K.J. NORDAL et E. SLINDE (1979): Production of a flavouring with meat-like sensory properties from slaughter animal blood. Proceedings 25th European Meeting of Meat Research Workers, Budapest, Paper 10.8; HALDCHRISTENSEN, V. (1978): Decolorisation of slaughter blood by partial enzymatic hydrolysis. Kongress-Dokumentation 24. Europäischer Fleischforscher-Kongress, Kulmbach, Paper H.5; HELLQUIST, C.O.H. (1978): SE-A-396.276, Food Sci. Technol Abstr. 10,45459; HILL, R et H.F. HOLDEN (1926): Preparation and properties of the globin and oxyhemoglobin. Biochem. J.20, 1326; MITSYK, V.E.I.F. OSADEHAYA, E.A. KORSTYUK, R.I. PUGACHEVSKAYA, A.M. MOROZ et L.Z. REZNICHENKO (1915): Quality of clarified animals' blood and of food products incorporating it. Tovarovedenic 8,67; OORD, A.H.A. van den et J.J. WESDORP (1979): Decoloration of slaughterhouse blood by treatment with hydrogen peroxide. Proceedings 25th European Meeting of Meat Research Workers, Budapest, Paper 10.7; PALMIN, V. et O. PETROVA (1972): Obtaining globin from blood erythrocytes. SU-A-405.523 (Cl.A.23j); STACHOWICS, K.J.C.E. ERIKSSON et S. TJELLE (1977): Enzymatic hydrolysis of ox-blood hemoglobin. Dans "Enzymes in Food and Beverage Processing" (ed. R.L. Ory and A.J. St. Angelo) ACS Symposium Series No. 47, P.295; TEALE, F.W.J. (1959): Cleavage of the haemprotein link by acid methylethyl. Ketone. Biochim. Biophys. Acta 35, 543; TYBOR, P.T.C.W. DILL et W.A. LANDMANN (1973): Effects of decolorization and lactose incorporation on the emulsification capacity of spray-dried blood protein concentrates. J. Food Sci 38, 4; TYBOR, P.T.,C.W. DILL et W.A. LANDMANN (1975): Functional properties of proteins isolated from bovine blood by a continuous pilot plant process. J. Food Sci. 40,155; J. WISMER-PEDERSEN, Fleischwirtschaft 60(5), 987 - 993 (1980); C. BOURGEOIS, Colloque Brive: Viande et Industries, 6-7 oct.

1982; VPC 3, nov.82, 13-16". On citera encore les documents suivants relevant de l'état de la technique: l'article de Chemical Abstracts 98 (1983), 52209t (voir également Util.Enzymes Technol. Aliment. Symp. Int. 1982, 389-93) intitulé "Enzyme Digestion of Red Blood Cell Proteins Decolored by Ethanol and Hydrogen Peroxide Treatment", US-A-3,732,170; ce dernier concerne une composition de nettoyage contenant une enzyme et un agent oxydant tel qu'un monopersulfate alcalin; cette composition est susceptible d'enlever les tâches de sang, notamment sur les tissus.

Les procédés faisant partie de l'état de la technique susmentionné sont intéressants industriellement mais présentent certains inconvénients parmi lesquels on peut citer le goût peu agréable conféré aux produits obtenus (amertume), une baisse des qualités alimentaires de ceux-ci liée à la dénaturation des protéines ainsi qu'une perte de leurs propriétés fonctionnelles telles que solubilité et pouvoir émulsifiant. En ce qui concerne l'aspect alimentaire, on notera plus particulièrement l'élimination inévitable du fer assimilable que contiennent sous forme complexée les groupes porphyriques de l'hémoglobine. Or, pour l'alimentation humaine, il est désirable de conserver ce fer en contact avec les protéines qu'on désire isoler, la possibilité de maintenir ce métal sous une forme consommable et assimilable par l'organisme présentant des avantages physiologiques évidents dans l'industrie alimentaire.

La présente invention permet de réaliser un tel objectif et, de plus, se propose de remédier aux inconvénients susmentionnés, c'est-à-dire de fournir un procédé pour obtenir les protéines du sang sous forme d'une poudre solide dont l'hémoglobine est décolorée et ceci, dans une très large mesure, sans provoquer la séparation du fer contenu dans les groupes porphyriques de celle-ci ni la dénaturation hydrolytique irréversible de la globine. Ce procédé, tel que défini à la revendication 1, se distingue notamment par le fait qu'on libère par catalyse enzymatique, mais en évitant autant que possible de les en séparer définitivement, lesdits groupes porphyriques de l'enveloppe de nature apolaire constituée des chaînes globiniques $\alpha$ et $\beta$ dans lesquelles ils sont enrobés, puisqu'on décolore ces groupes porphyriques ainsi mis à nu en les oxydant.

Pour mieux comprendre l'invention, on se referrera au dessin

en annexe dans lequel:

la fig. 1 représente schématiquement en perspective et vu de dessus une molécule d'hémoglobine;

la fig. 2 constitue une vue latérale de cette même molécule;

la fig. 3 représente schématiquement un appareil électrolytique pour décolorer, par oxydation, les groupes porphyriques de l'hémoglobine.

La molécule d'hémoglobine, ainsi qu'on peut le voir aux figures 1 et 2 se compose principalement de deux paires de chaînes polypeptidiques $\alpha_1$, $\alpha_2$ et $\beta_1$, $\beta_2$ repliées sur elles-mêmes en un bloc relativement compact et entre les mailles desquelles sont immobilisés des groupes hétérocycliques porphyriques (représentés par le signe HEME) contenant, sous forme complexée, un atome de fer. Ces groupes HEME sont ainsi normalement placés dans un environnement essentiellement apolaire et sont peu accessibles aux réactifs aqueux.

Lors de l'application d'une des techniques antérieures de décoloration, l'apport d'une grande quantité d'un solvant relativement peu polaire, comme par exemple l'acétone, perméabilise l'édifice moléculaire de l'hémoglobine et, outre l'insolubilisation de la partie protéique qu'il provoque, conduit à une dissolution sélective des groupes porphyriques dans ce solvant.

Par ailleurs, lors de l'application d'une autre de ces techniques de décoloration, celle qui fait intervenir une oxydation par l'eau oxygénée en concentration élevée, on comprend qu'il faille utiliser un grand excès de celle-ci pour parvenir au résultat recherché en raison du manque d'accessibilité intrinsèque des groupes "heme" protégés par l'écheveau moléculaire formé par les chaînes polypeptidiques $\alpha$ et $\beta$.

Ainsi, pour rendre plus accessibles à l'oxydation ces groupes "heme", il faut dérouler ou "débobiner" cet écheveau; c'est précisément ce que la présente invention se propose de faire par un traitement enzymatique ménagé de l'hémoglobine, ce traitement conduisant à une modification non hydrolytique du réseau structurel quaternaire de celle-ci. En effet, on a constaté avec surprise que le traitement préliminaire de l'hémoglobine en milieu aqueux par certaines enzymes en faible concentration et à température relativement peu élevée conduisait à la formation d'une solution ou suspension d'hémoglobine qu'on pouvait ensuite décolorer par oxydation dans des conditions particulièrement douces et avec un minimum d'oxydant, une telle opération pouvant être effectuée sans que se produise une dénaturation majeure irréversible des protéines de l'hémoglobine. On a donc pu postuler, en fonction de ces observations, que l'action enzymatique dans les conditions précitées ne conduit pas à une rupture irréversible des liaisons peptidiques mais plutôt à un affaiblissement plus ou moins marqué des liaisons de nature secondaire (liaisons électrostatiques, de Van der Waals, hydrogène ou autres) assurant la cohésion spatiale de la structure quaternaire de l'hémoglobine et provoque probablement un déroulement ou linéarisation plus ou moins poussés des chaînes polypeptidiques $\alpha$ et $\beta$. La structure de ces chaînes globiniques se rapproche alors sensiblement de celle des chaînes correspondantes de la myoglobine présente dans les muscles des mammifères et, par cela, les groupes porphyriques de l'"heme" se trouvent plongés dans un milieu polaire et deviennent ainsi mieux accessibles aux agents oxydants en milieu aqueux sans pourtant se désolidariser complètement de la portion polypeptidique à laquelle ils sont normalement rattachés.

Comme enzymes, on utilise avantageusement dans le présent procédé des protéases telles que les alcalases, la papaïne, la trypsine et la pepsine et autres enzymes analogues en concentration suffisante pour provoquer l'effet de "débobinage" évoqué ci-dessus, mais insuffisant pour provoquer une scission hydrolytique irréversible des chaînes protéiques de l'hémoglobine. Des concentrations de l'ordre de 0,001 à 0,5% en poids d'enzyme par rapport au poids de la matière sèche du sang peuvent convenir, étant cependant donné que ces limites peuvent être outrepassées dans certains cas spéciaux.

Pour effectuer le traitement, on peut utiliser le sang complet (donc travailler en présence du plasma) après adjonction d'un anticoagulant, ou le cruor après séparation de ce sérum. De manière générale, on commence par provoquer l'hémolyse des hématies par les moyens habituels, par exemple par dilution à l'eau de manière à libérer l'hémoglobine en milieu aqueux et à la rendre accessible à l'action des enzymes. Puis on ajoute à la solution (dont le pH a été ajusté par les moyens habituels à la valeur la plus favorable en fonction du type d'enzyme choisi) la quantité requise d'enzyme et on procède à une incubation à une température comprise entre environ 20 et 50°C pendant un temps convenable (compris entre environ 2 et 24 h, par exemple) pour réaliser l'effet désiré. Quoique les températures susmentionnées ne soient pas, en soi, critiques, on préfère opérer en dedans de telles limites pour les raisons suivantes: aux températures inférieures à 20°, l'action des enzymes se ralentit sensiblement et le temps réactionnel risque de devenir exagérément long pour les applications pratiques. Au delà de 50°C, l'action enzymatique volontairement limitée aux réactions non irréversibles devient plus difficile à contrôler, particulièrement si on utilise des concentrations d'enzymes dans le haut de la gamme précitée et on risque une certaine dénaturation irréversible de la matière protéique. On notera cependant qu'un certain taux de dénaturation irréversible est parfaitement tolérable dans le présent procédé tant que ce phénomène ne conduit pas à des résultats indésirables tels qu'une perte notable de fer, la formation de peptides de goût désagréable ou la précipitation d'un produit qui ne puisse plus être oxydé facilement dans des conditions douces, de telles conditions constituant, comme on l'a vu plus haut, un des avantages de l'invention.

Une fois l'action préliminaire due aux enzymes achevée, on procède à la décoloration par oxydation douce de la solution ou suspension colorée. On peut soit agir directement sur la solution telle qu'elle résulte du traitement enzymatique soit procéder auparavant à une concentration de la matière à décolorer, par exemple par centrifugation. Pour accélérer la sédimentation de l'hémoglobine à concentrer on peut ajouter un solvant hydrocompatible, par exemple un alcool, le choix d'un tel solvant étant principalement dicté par des considérations organoleptiques c'est-à-dire le souci d'éviter un solvant susceptible de conférer un goût désagréable au produit décoloré terminé. Bien entendu, lorsqu'on soumet la solution de digestion enzymatique à une centrifugation en vue de condenser la matière à oxyder, on reprend ensuite le culot résultant de cette opération par de l'eau ou une solution aqueuse dans laquelle il se redissout ou se redisperse facilement. La présence éventuelle d'une faible proportion de matière irréversiblement dénaturée ne devrait pas gêner cette remise en solution et/ou dispersion, ni l'oxydation subséquente.

Pour effectuer ladite décoloration par oxydation des groupes "heme", on peut utiliser les oxydants habituels tels que l'hypochlorite ou l'eau oxygénée en faibles proportions. Ainsi, dans les conditions habituelles, on peut utiliser des quantités d'oxydants comprises entre environ 0,01 et 0,5 parties en poids par partie en poids de matière sèche du sang, ces quantités étant prévues pour qu'il ne soit pas nécessaire de détruire l'excès d'oxydant après blanchiment (si excès il y a) comme dans les méthodes antérieures. Par ailleurs, on a constaté que la quantité d'oxydant à utiliser était en rapport avec le taux de stabilisants incorporé audit oxydant pour assurer sa conservation au stockage. Ainsi, il est possible d'utiliser une notablement moindre quantité de $H_2O_2$ lorsque celle-ci est fraîchement préparée que lorsqu'elle provient d'une source commerciale et qu'elle a été stockée en présence d'un stabilisant.

Pour effectuer l'oxydation, on travaille à des températures relativement basses pour éviter toute action néfaste de l'oxydant au niveau des chaînes protéiniques elles-mêmes. Ainsi, des températures de l'ordre de 5 à 50°C conviennent, de préférence, entre 5 et 20°C, dans la majorité des cas, la durée de l'oxydation étant généralement comprise entre 1 et 12 h.

Alternativement à l'adjonction d'un réactif oxydant comme mentionné ci-dessus, on peut également avoir recours, pour la décoloration de l'hémoglobine, à une oxydation électrolytique. Pour ce faire, on utilisera avantageusement le dispositif illustré à la fig. 3 du dessin.

Ce dispositif comprend un bac ou cuve 1 en verre, acier inoxydable ou matière plastique inerte pourvu d'un couvercle 2. Le fond de la cuve 1 est muni d'une entrée de gaz 3, par exemple de l'air ou de l'oxygène et le couvercle est pourvu d'une sortie 4 de ce gaz. Le dispositif comprend encore une cathode poreuse 5 en feutre de graphite ou autre matière poreuse inerte conductrice de l'électricité. La porosité de cette cathode (pores de l'ordre du dixième de $\mu$m à quelques $\mu$m) est appropriée pour qu'un liquide aqueux ne la traverse pas aisément tout en donnant libre passage, à travers elle, au gaz pénétrant par l'orifice 3, la pression de celui-ci étant suffisante pour empêcher ledit liquide (catholite) imprégnant la cathode poreuse de s'écouler à travers celle-ci, et ainsi d'en retenir

la majeure partie dans le compartiment cathodique. Le dispositif comprend encore un compartiment anodique 6 délimité par des parois verticales 7 et un fond 8 de matière poreuse agissant comme séparateur électrolytique. La matière de ce séparateur, inerte, peut être de la porcelaine poreuse ou une matière plastique frittée (par exemple DARAK 5000 de la Société GRACE, U.S.A.). On verra plus loin que la présence de ce séparateur n'est pas indispensable aux opérations de décoloration du sang. Finalement, le dispositif comprend une anode 9 sous forme d'une grille de matériau conducteur inerte, cette électrode, ainsi que la cathode étant reliées à une source de courant non représentée.

Pour mettre en oeuvre le présent dispositif, on verse dans la cuve une certaine quantité d'un électrolyte formant catholyte (généralement une solution alcaline) indiqué au dessin par le chiffre de référence 10. Puis on introduit le compartiment anodique contenant le sang hémolysé et traité enzymatiquement comme décrit plus haut ou la suspension aqueuse correspondante d'hémoglobine si le produit de départ était du cruor. On relie les électrodes à la source disponible de courant continu et on fait circuler le gaz oxydant à travers la cathode et les liquides à électrolyser grâce aux tubulures 3 et 4. En présence d'eau, l'oxygène gazeux qui diffuse à travers la cathode est réduit suivant le schéma suivant:

$$O_2 + H_2O + 2e \longrightarrow HO_2 + OH^-$$

et l'hydroperoxyde ainsi formé, diffusant à travers le séparateur poreux 8, produit la décoloration du sang.

En variante, on remplace l'électrolyte 10 par une suspension de sang ou de cruor prétraité comme ci-dessus et on omet d'intercaler le séparateur 8 ce qui permet une décoloration plus rapide, l'oxydant étant engendré, in situ, dans la solution à décolorer.

En variante encore, on introduit dans le compartiment anodique un électrolyte quelconque, de préférence une solution diluée de soude caustique et après avoir fait fonctionner le dispositif un temps suffisant pour que se forme, dans le compartiment cathodique, une concentration notable en $H_2O_2$, par exemple 0,5 à 3 g/l, on utilise le catholyte, après neutralisation par un acide, comme agent décolorant de la solution de sang ou de cruor traitée aux enzymes. Bien entendu, un tel agent oxydant, extrêmement actif, doit être utilisé fraîchement préparé vu son manque de stabilité.

De préférence, pour l'oxydation électrolytique du sang, on utilise les paramètres opératoires suivants: température ambiante (20 - 30°C); pression d'air ou d'oxygène: 0,01 à 0,1 bar; tensions électriques de 5 à 15 volts.

Lorsque l'opération de décoloration par oxydation de l'hémoglobine est terminée, on procède à l'élimination de la phase aqueuse dans laquelle s'est déroulée cette oxydation afin d'en séparer la matière décolorée sous forme d'une poudre sèche.

Pour ce faire, on peut procéder de diverses manières parmi lesquelles on citera le traitement direct de cette phase aqueuse contenant en suspension ou solution la matière décolorée, soit par évaporation, soit par atomisation dans l'air ou un gaz inerte, soit par lyophilisation suivant les techniques habituelles. On peut aussi précipiter la matière solide de la phase aqueuse par adjonction d'un solvant approprié (alcool, acétone, THF, dioxanne, etc..) et la séparer ensuite par essorage ou centrifugation suivant les moyens habituels. On préfère cependant les premiers moyens cités pour des raisons de commodité et, également, pour éviter dans la mesure du possible une contamination par des matières étrangères susceptibles d'influencer ses qualités organoleptiques.

La matière ainsi séparée et séchée se présente en tant qu'une poudre de couleur claire, jaunâtre ou beige, sans odeur et de goût pratiquement neutre. Elle contient une quantité de fer pratiquement identique à celle du sang ordinaire séché ou, dans le cas où seul du cruor a été utilisé, une quantité correspondant à du cruor séché non décoloré. Ce fer se présente sous forme complexée (vraisemblablement par l'intermédiaire des groupes porphyriques oxygénolysés toujours présents dans la matière) ce qui permet son assimilation directe et facile lors de l'ingestion d'aliments contenant ladite poudre. Celle-ci constitue donc un ingrédient de choix dans l'alimentation humaine puisqu'elle allie le pouvoir nutritif des protéines dont elle est formée au pouvoir reconstituant et anti-anémique du fer assimilable qu'elle contient.

Pour utiliser cette poudre dans l'industrie alimentaire, on la

mélange à des protéines dont elle complète la balance en aminoacides la plus propice à l'usage alimentaire recherché (alimentation humaine par exemple). Comme protéines végétales, on peut citer celles des légumineuses ou du soja. On peut également combiner les protéines décolorées du sang à des aliments peu protéinés (tels que fécules et céréales) de manière à enrichir ceux-ci. On peut en fabriquer des aliments variés tels que soupes, farines, biscuits, pain, gâteaux, etc..

Les Exemples qui suivent illustrent l'invention.

Exemple 1

On a ajouté à 150 ml de sang de porc, contenant 0,02% d'EDTA (Ethylène diamine tetracétique) comme anti-coagulant (contenu en matières sèches environ 30 g) 300 ml d'eau à température ordinaire et on a agité la suspension jusqu'à hémolyse complète des cellules rouges.

On a alors ajusté le pH à 3,5 - 4 avec du HCl N/10 et on a ajouté à la solution de couleur rouge contenant, en suspension, des débris de parois cellulaires 0,03 g (0,1% en poids de matière sèche) d'enzyme protéolytique de Rhizopus fourni par la société RAPIDASE, France) et, après homogénéisation, on a laissé le tout 12 h à 40°.

Après cette période, on n'a constaté aucune précipitation particulière dans la phase aqueuse qu'on a concentrée au ROTAVAPOR à 40°C jusqu'à un volume de 170 ml. On a alors ajouté, après refroidissement à température ambiante, 90 ml d'eau oxygénée à 1% v/v et on a laissé une nuit au repos à 5°C. Après cette période, on a constaté que la phase aqueuse avait perdu la plus grande partie de sa couleur (teinte brun clair). Après y avoir ajouté 100 ml d'alcool, on a soumis cette phase à une centrifugation (10.000 rpm) pendant 5 min ce qui a occasionné la condensation au fond du récipient de centrifugation d'une partie notable de la matière en suspension. On a séparé ce concentrat d'avec la phase plus liquide supérieure et on a lyophilisé ce condensat de manière à le convertir en une poudre sèche de couleur beige. Cette poudre, non hygroscopique, était pratiquement sans goût et sans odeur. Rendement 15,7 g (env. 50%).

A titre comparatif, un échantillon identique de sang a été traité comme ci-dessus, mais à l'exception de l'étape de digestion enzymatique partielle. Aucune décoloration notable de cet échantillon de contrôle n'a été constaté après adjonction de l'eau oxygénée.

Exemple 2

A 150 ml de sang de porc contenant en poids 0,02% de citrate de potassium comme anti-coagulant, on a ajouté 300 ml d'eau comme dans l'Exemple 1 et, après hémolyse complète, on a ajouté, à pH 7,6, 0,15 g de papaïne (d'origine végétale, extraite d'un fruit tropical, la papaye).

Après une nuit à 40°C, on a ramené le pH à 5 et ajouté 150 ml d'alcool. Après quelques heures de repos, on a centrifugé la solution et, après rinçage du culot avec de l'eau distillée (3 fois), on a repris celui-ci avec 150 ml d'eau où il s'est redispersé sans difficulté. On a procédé à la décoloration de cette suspension par du $H_2O_2$ du commerce comme à l'Exemple 1 et, après une nuit de repos à 5°C, on a recentrifugé, lavé le culot 3 fois à l'eau et procédé à une lyophilisation, ce qui a fourni 15,4 g de poudre légèrement jaunâtre. Cette poudre était pratiquement insipide et a pu être utilisée, en mélange avec une protéine végétale (soja), pour la préparation de biscuits diététiques reconstituants et desanémiants.

Exemple 3

On a utilisé 200 ml de sang de porc contenant 0,02% d'acide éthylène diamine tetraacétique (EDTA) comme anti-coagulant et après l'avoir hémolysé par 400 ml d'eau et traité enzymatiquement comme à l'Exemple 1 (0,2 g de trypsine au lieu d'enzyme de Rhizopus), on l'a soumis à un traitement de décoloration par électrolyse au moyen d'un dispositif conforme à celui représenté à la fig. 3.

Le bac utilisé avait une contenance globale de 1 - 1,2 litre, la cathode étant constituée de feutre SIGRI de 10 mm d'épaisseur et d'une surface de base de 100 cm2 et l'anode d'une grille de titane-platiné à mailles grossières de type habituel. On a travaillé en l'absence d'un séparateur 8 (donc sans faire de distinction particulière entre les zones cathodiques et anodiques). On a donc versé toute la solution à décolorer directement dans le bac et après avoir ajusté le pH à 6 - 7 (NaOH N/100), on a disposé la grille anodique à une distance approximativement moyenne entre le fond du bac et le niveau supérieur de la solution. On a ensuite procédé à l'électrolyse dans les conditions suivantes: Pression d'oxygène introduit par la tuyauterie 3: 0,02 bar; densité de courant: 1 A/dm2; température 24°C; lente agitation de la solution à traiter.

Après environ 50 min de traitement, on a observé une décoloration pratiquement complète de la solution (couleur brun-clair) et le dépôt d'une proportion notable de protéines sur la grille anodique. On a alors retiré l'anode et, après lavage à l'eau et séchage à l'air sec (40°C), on en a détaché par brossage environ 8 g de protéine blanchâtre.

Le reste de la solution a été soumis à une évaporation sous pression réduite comme à l'Exemple 1 puis, lorsque le résidu s'était réduit à un volume d'environ 150 - 200 ml, on a soumis celui-ci à une lyophilisation, ce qui a fourni environ 30 g d'une poudre protéinique de couleur brun clair.

Par analyse de cette poudre, on a constaté qu'elle contenait 87% de protéines et 0,17% de fer. A titre comparatif, la teneur moyenne en fer du sang séché brut est d'environ 0,15% (voir R.A.M. DELANEY, Y. Food Techn. <u>1977</u> (12), 339-358). La valeur mesurée du fer dépassant la valeur théorique, on a admis que la différence est à attribuer à une erreur expérimentale inhérente à la méthode d'analyse.

<u>Exemple 4</u>

On a utilisé un dispositif tel que représenté à la fig. 3 et conforme à la présente description comportant un séparateur 8 en plastique poreux (DARAK 5000 de la Société GRACE). Les paramètres opératoires mis en jeu étaient les suivants: catholyte: 150 ml de NaOH 0,2 N; anolyte: 150 ml de NaOH 1 N; température: 25°C; densité de courant: 0,5 A/dm2; pression d'oxygène: 0,05 bar; tension: 6,8 V; durée: 1h; concentration du catholyte en $HO_2$: 1,275 g/l; rendement faradique ($\eta$ = 68%).

On a par ailleurs préparé une solution aqueuse d'hémoglobine

de sang de porc (environ 30 g/300 ml) à partir de 200 ml de sang de porc, coagulation par les moyens habituels, séparation du cruor par centrifugation et hémolyse de ce cruor dans 300 ml d'eau à pH 5.

On a effectué une digestion de cette solution par adjonction de 0,3 g de pepsine et repos 12 h à 30°C. A 150 ml de cette solution, on a ajouté les 150 ml de catholyte contenant $H_2O_2$ préparé comme ci-dessus après avoir rapidement neutralisé celui-ci par du HCl 2 N. Dans les 150 ml restants de la solution d'hémoglobine, on a ajouté 40 ml d'eau oxygénée commerciale à 1% v/v. Les deux échantillons ont été laissés au repos à température ambiante et on a constaté que l'échantillon contenant l'oxydant préparé électrolytiquement se décolorait plus rapidement que celui contenant l'eau oxygénée du commerce quoique la concentration effective en oxydant soit inférieure dans le premier cas que dans le second.

On a ensuite traité les échantillons pour en séparer la poudre protéinique décolorée comme dans les Exemples précédents. Rendement global environ 30 g.

Exemple 5

On a travaillé comme dans l'Exemple 4 et décoloré 150 ml d'une solution d'hémoglobine en utilisant une solution d'électrolyse fraîchement préparée et neutralisée.

On a soumis la solution décolorée à un séchage par atomisation dans un courant d'air à 40°C au moyen d'un dispositif habituel d'atomisation (utilisé normalement, par exemple, pour l'atomisation du café instantané), on a obtenu alors une poudre protéinique de goût salé, ce goût résultant des sels mélangés à la poudre et provenant de la neutralisation de la solution.

On a cependant pu utiliser cette poudre en mélange convenable avec d'autres ingrédients dans la fabrication d'aliments de goût salé (liant pour sauces; poudre pour potage instantané).

Exemple 6

On a acidifié 5 l de sang de porc non stabilisé par un anti-coagulant à pH 5 et après une nuit de repos à 5°C, on a procédé à une centrifugation pour en séparer le cruor. On a ainsi obtenu environ 1,5 kg de cruor brut (caillot) contenant environ 50-60% d'eau. On a hémolysé 170 g de cette masse brute dans 350 ml d'eau et on a effectué une digestion de cet hémolysat 24 h à 40° avec 0,07 g de trypsine. On a ajouté 250 ml d'alcool à 95° et, après quelques heures de repos à 10°C, on a centrifugé la solution. On a ensuite redispersé le culot dans 300 ml d'eau et ajouté progressivement un mélange de 20 ml d'$H_2O_2$ à 1% v/v et 100 ml d'eau de Javel à 1% en poids. On a observé une décoloration rapide (environ 15-30 min à température ambiante) après quoi on a recentrifugé, lavé le culot 4 fois à l'eau distillée et séché celui-ci sous pression réduite à une température ne dépassant pas 30-35°C. On a ainsi obtenu 27,5 g de poudre de protéine décolorée analogue aux produits obtenus suivant les Exemples précédents.

Exemple 7

Utilisation de la poudre de sang décoloré en alimentation humaine: préparation d'un snack salé.

Dans un récipient, on fait fondre 100 g de matière grasse composée de 20% de beurre et 80% de substitut de beurre de cacao sous forme de graisse végétale hydrogénée. Ceci constitue le mélange 1.

Dans un second récipient, on mélange intimement 120 g d'amidon, 180 g de lait écrémé en poudre, 210 g de fromage en poudre, 3 g de gélatine et 75 g de poudre de sang entier décoloré.

Dans un troisième récipient, on prépare une solution dans 200 g d'eau des ingrédients suivants: 12 g de sel, 1,2 g de sorbate de potassium, 25 g de sirop de glucose et 1 g de glycérine.

Dans un mélangeur à bras du type "Hobart", on mélange les contenus des récipients II et III puis on ajoute le contenu fondu du récipient I. On porte le mélange au bain marie sous agitation constante, puis on laisse refroidir. La masse obtenue est formée en pâtons et roulée dans une pâte boulangère ou patissière, brisée ou feuilletée. Le produit final, après passage au four, est un snack à caractère salé enrichi en protéines animales par l'apport de 8% de poudre de sang décoloré.

Exemple 8

On a préparé une solution de citrate de sodium à 3,7% de concentration (w/v), puis on a mélangé 130 ml de cette solution à 870 ml de sang de porc fraîchement recueilli et on a ajouté 1 litre d'eau au mélange pour provoquer l'hémolyse des globules rouges. Par adjonction à la solution ci-dessus de HCl N, on l'a portée au pH de 5.

On a traité à 40°C la solution par de la trypsine à raison de 0,4 g de trypsine/litre de sang. On a ensuite refroidi à 8°C la solution et on a ajouté 400 ml d'alcool 70° par 2 litres de solution ce qui a occasionné la formation d'un précipité. On a séparé ce précipité par centrifugation et on l'a redispersé dans 150 ml d'eau; puis sous agitation constante à 35°C, on a introduit de l'eau oxygénée à 1% v/v jusqu'à décoloration, soit 40 ml.

On a alors centrifugé la suspension et on a lavé le culot résiduel à deux reprises avec de l'eau pure puis on a séché ce solide par lyophilisation.

Le produit obtenu (80 g) était d'une couleur jaune clair et se prêtait aux applications alimentaires.

## R E V E N D I C A T I O N S

1. Procédé pour obtenir, à l'état de matière pulvérulente solide, les protéines du sang dont l'hémoglobine est substantiellement décolorée tout en permettant d'éviter ou de sensiblement réduire, pendant cette opération, la perte du fer contenu dans sa portion "heme" ainsi que sa dénaturation irreversible, caractérisé par le fait que (a) on soumet cette hémoglobine en milieu aqueux à un traitement ménagé de catalyse enzymatique, de manière que les chaines globiniques, tout en ne subissant qu'un minimum ou une absence de scissions hydrolytiques, se dissocient et, en se déployant, rendent les groupes porphyriques de l'heme plus accessibles aux agents de décoloration; puis (b) on décolore par oxydation ces groupes hémiques ainsi libérés.

2. Procédé suivant la revendication 1, caractérisé par le fait que pour l'étape (a) on utilise des protéases telles que l'alcalase, la papaïne, la pepsine, la trypsine et la protéase de Rhizopus.

3. Procédé suivant la revendication 2, caractérisé par le fait qu'on utilise des concentrations en poids d'enzymes par rapport à la matière sèche du sang de 0,001 à 0,5%.

4. Procédé suivant la revendication 3, caractérisé par le fait que pour l'étape (a) on travaille entre 20 et 50°C.

5. Procédé suivant la revendication 1, caractérisé par le fait que pour l'étape (b) on utilise, en milieu aqueux, un agent oxydant hydrosoluble tel que l'hypochlorite ou l'eau oxygénée.

6. Procédé suivant la revendication 1, caractérisé par le fait que pour l'étape (b) on procède par oxydation électrolytique.

7. Procédé suivant la revendication 1, caractérisé par le fait qu'après l'étape (a) et avant d'effectuer l'étape (b), on concentre la solution ou suspension d'hémoglobine résultant du traitement enzymatique de manière à réduire le volume global occupé par la matière à décolorer suivant l'étape (b).

8. Procédé suivant la revendication 7, caractérisé par le fait qu'on ajoute un solvant hydrocompatible à la solution ou suspension d'hémoglobine résultant de la mise en oeuvre de l'étape (a) afin de diminuer la solubilité de celle-ci dans le milieu aqueux de traitement enzymatique et de faciliter sa concentration par centrifugation.

9. Procédé suivant la revendication 1, caractérisé par le fait qu'après l'étape (b), on élimine la phase aqueuse où s'est déroulée l'oxydation afin d'en séparer l'hémoglobine décolorée sous forme d'une poudre.

10. Procédé suivant la revendication 9, caractérisé par le fait qu'on procède par évaporation, atomisation ou lyophilisation.

11. Procédé suivant la revendication 9, caractérisé par le fait que le contenu en fer de ladite poudre décolorée est pratiquement identique à celui d'un sang ou d'un cruor séché non décoloré.

12. Procédé suivant la revendication 1, caractérisé par le fait qu'on effectue la décoloration de l'hémoglobine du sang en présence ou en l'absence du plasma sanguin.

13. Poudre protéinique comestible décolorée contenant du fer obtenue à partir du sang entier ou de cruor décoloré par le procédé suivant la revendication 1.

14. Poudre protéinique décolorée utilisable dans l'alimentation humaine obtenue à partir de sang entier ou de cruor dont l'hémoglobine a été décolorée par oxydation, caractérisée par le fait qu'elle contient du fer sous forme complexée.

15. Poudre protéinique suivant la revendication 13, caractérisée par le fait que le fer est celui naturellement contenu dans la portion heme du sang soumis à la décoloration.

16. Utilisation de la poudre protéinique suivant les revendications 13 à 15 pour la préparation d'aliments reconstituants.

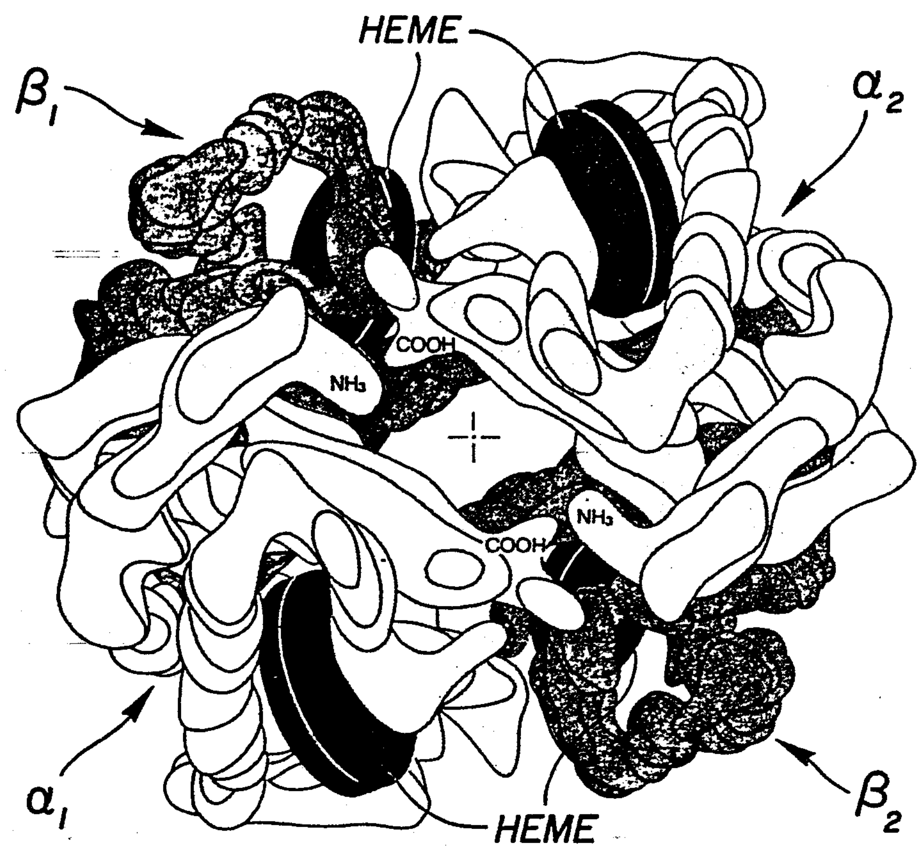
HEME
$\beta_1$
$\alpha_2$
COOH
$NH_3$
$NH_3$
COOH
$\alpha_1$
HEME
$\beta_2$

FIG. 1

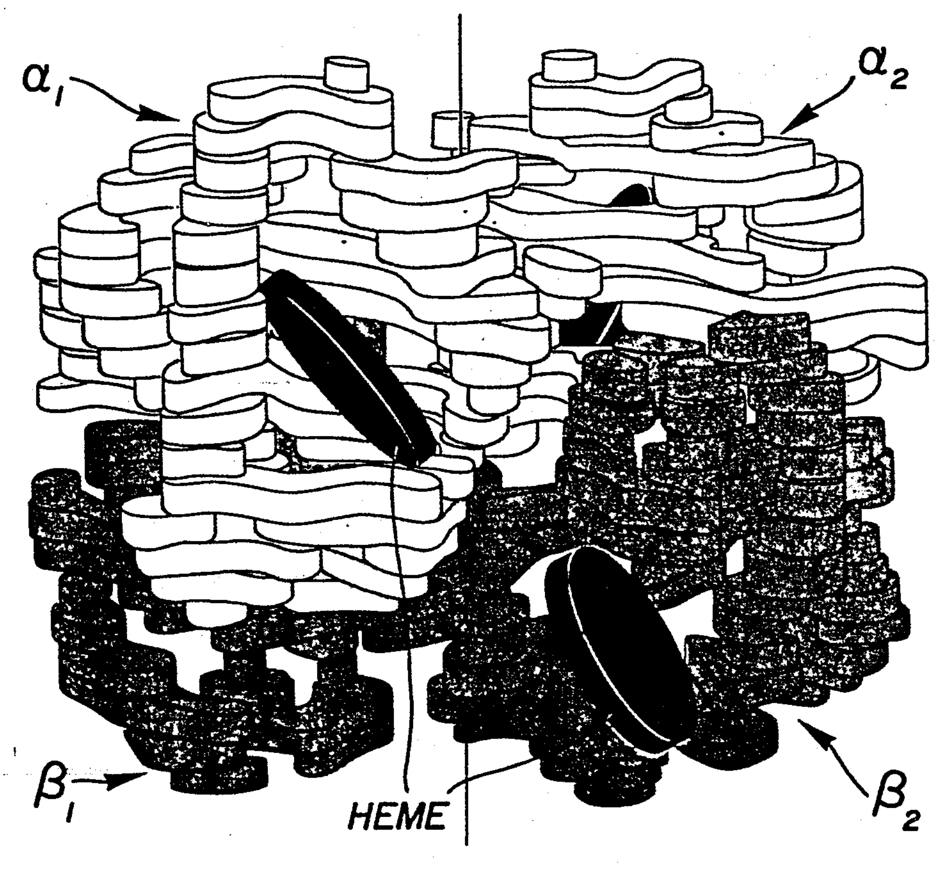
$\alpha_1$
$\alpha_2$
$\beta_1$
HEME
$\beta_2$

FIG. 2

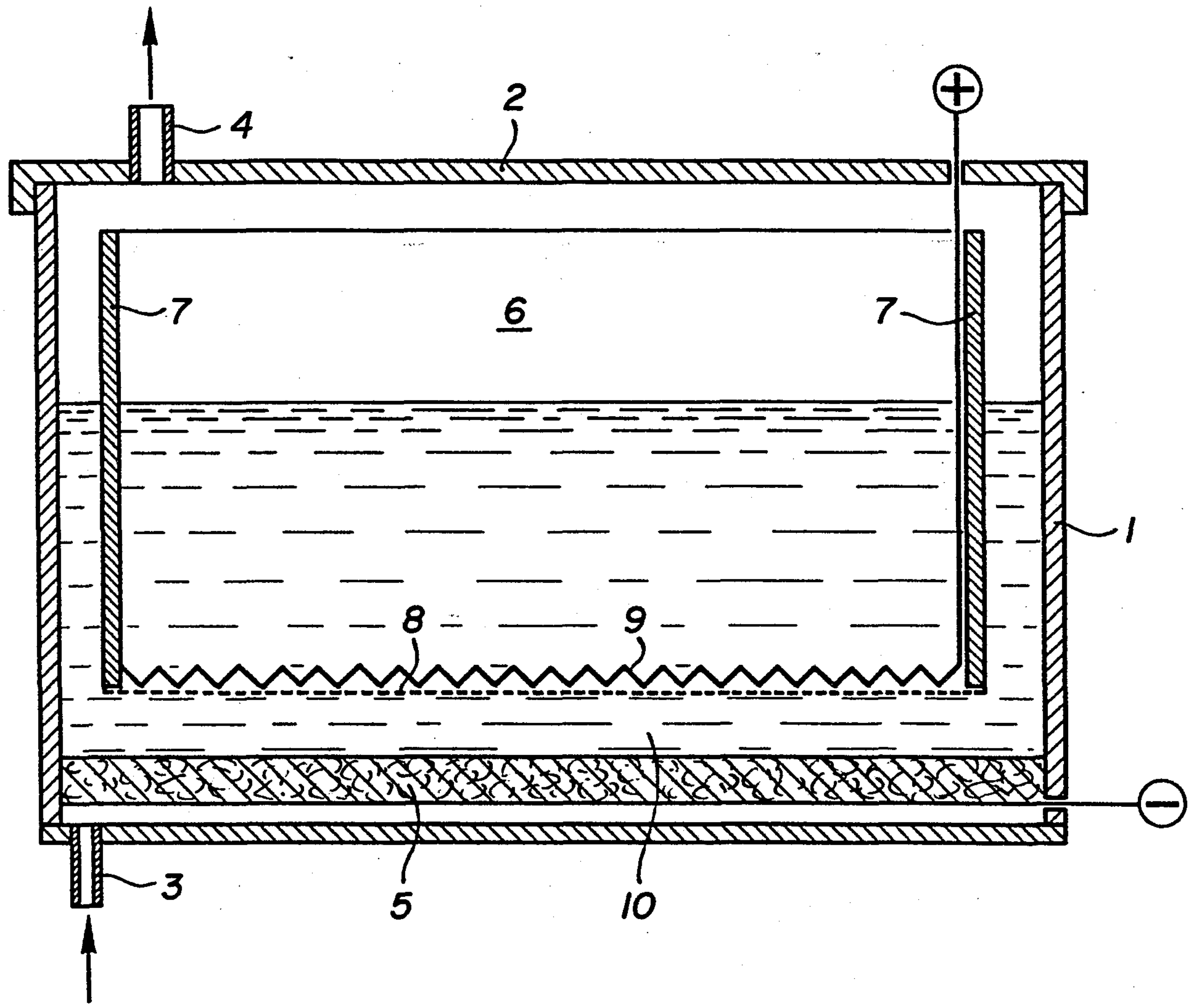


FIG. 3

Office européen des brevets

**0148114**
Numéro de la demande

# RAPPORT DE RECHERCHE EUROPEENNE

EP 84 81 0530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A,D | CHEMICAL ABSTRACTS, vol. 98, no. 7, 7 février 1983, page 538, no. 52209t, Columbus, Ohio, US; J.S. CHEN et al.: "Enzyme digestion of red blood cell proteins decolored by ethanol and hydrogen peroxide treatment" & UTIL. ENZYMES TECHNOL. ALIMENT., SYMP. INT. 1982, 389-393<br>--- | 1,2,5, 8,12 | A 23 J 3/00 |
| A,D | US-A-3 732 170 (Y. DEMANGEON)<br>* Revendication 1; colonne 1, lignes 52-58 *<br>--- | 1,2 | |
| A,D | DE-C- 744 055 (NORDMARK-WERKE)<br>* Revendication 1 *<br>--- | 1 | |
| | | | DOMAINES TECHNIQUES RECHERCHES (Int. Cl.4) |
| A,D | PROCEEDINGS OF THE EUROPEAN MEETING OF MEAT RESEARCH WORKERS, août 1980, no. 24; V. HALD-CHRISTENSEN: "Decolourisation of slaughter blood by partial enzymatic hydrolysis"(FSTA-80-08-S1438, 80046876)<br>----- | 1,12 | A 23 J<br>A 23 L |

Le présent rapport de recherche a été établi pour toutes les revendications

| Lieu de la recherche | Date d'achèvement de la recherche | Examinateur |
|---|---|---|
| LA HAYE | 13-02-1985 | PEETERS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant